(19) Europäisches Patentamt
European Patent Office
Office européen des brevets

(11) **EP 1 894 815 B1**

(12) **FASCICULE DE BREVET EUROPEEN**

(45) Date de publication et mention
de la délivrance du brevet:
**07.10.2009 Bulletin 2009/41**

(51) Int Cl.:
***B62D 6/04*** *(2006.01)* ***B62D 5/04*** *(2006.01)*

(21) Numéro de dépôt: **06300901.3**

(22) Date de dépôt: **29.08.2006**

(54) **Système d'aide à la conduite d'un véhicule automobile, notamment en cas de déport provoqué par un vent latéral**

Unterstützungssystem zur Lenkung eines Kraftfahrzeugs, insbesondere im Fall von seitlichem Versatz wegen Seitenwindes.

Assistance system to steer a motor vehicle, in particular in case of lateral displacement due to cross-wind

(84) Etats contractants désignés:
**DE ES GB IT**

(43) Date de publication de la demande:
**05.03.2008 Bulletin 2008/10**

(73) Titulaire: **Peugeot Citroën Automobiles SA
78140 Vélizy-Villacoublay (FR)**

(72) Inventeur: **Gay, François
27340 Criquebeuf/Seine (FR)**

(56) Documents cités:
**DE-A1- 19 527 334**   **GB-A- 2 259 892**
**GB-A- 2 275 032**   **JP-A- 2000 025 630**
**JP-A- 2000 033 879**   **US-A1- 2003 055 543**
**US-A1- 2004 138 796**

**Description**

La présente invention concerne un système d'aide à la conduite d'un véhicule automobile, notamment en cas de déport provoqué par un vent latéral.

Plus particulièrement, l'invention se rapporte à un système d'aide à la conduite d'un tel véhicule équipé d'une direction assistée électrique munie d'un actionneur.

Le problème spécifique auquel se rapporte l'invention est le cas du déport latéral que subit un véhicule lorsqu'il est soumis à une perturbation de type par exemple vent latéral.

En effet, du fait de la portance du véhicule, celui-ci subit un torseur aérodynamique tendant à lui faire quitter la trajectoire initiale voulue par le conducteur.

En effet, lorsque le vent commence à s'appliquer sur la face latérale du véhicule, un effort aérodynamique s'applique sur la caisse de celui-ci suivant le torseur aérodynamique de la caisse. Celui-ci est le résultat de la forme de la caisse et donc essentiellement de son style.

Par conséquent, le véhicule subissant un effort latéral, il se déplace et dévie de la trajectoire initialement souhaitée par le conducteur. Cet écart de trajectoire se mesure par exemple par une distance de déviation.

Cette sensibilité du véhicule à la perturbation de vent latéral est fonction de la portance latérale du véhicule et les véhicules les plus défavorisés sont par exemple les véhicules les plus hauts de type utilitaire et monospace.

Le conducteur doit donc alors agir sur le volant de direction pour corriger la trajectoire afin de rejeter la perturbation de vent latéral vis à vis de sa volonté de suivre une trajectoire déterminée, comme par exemple une ligne droite.

Mais ceci est une source d'inconfort pour le conducteur du véhicule.

On connaît du document GB-A-2 259 892, considéré comme étant l'état de l'art antérieur le plus proche, un système d'aide à la conduite appliqué à une direction assistée électrique couplée à une colonne de direction ou directement aux roues du véhicule dans une direction dite de « Steer-By-Wire ».

Ce document enseigne d'utiliser une boucle de correction de trajectoire du véhicule en cas de vent latéral mais ne tient pas compte de la volonté conducteur dans cette boucle de correction ; a correction étant appliquée en permanence.

Ce qui peut poser problème dans certaines situations de vie du véhicule pour lesquelles une telle correction n'est pas souhaitée et notamment dans le cas de la prise d'un virage à forte courbure ou un rond point.

Le but de l'invention est donc de résoudre cet inconvénient.

A cet effet, l'invention a pour objet un système d'aide à la conduite d'un véhicule automobile conforme à l'objet de la revendication 1

Ledit système comporte également un calculateur électronique d'activation de la direction assistée électrique raccordé à un capteur d'angle volant, à un capteur de vitesse du véhicule, à un capteur de lacet, à un capteur d'accélération latérale et à un capteur de couple appliqué sur le volant par le conducteur, pour déterminer le couple de correction à appliquer par l'actionneur de direction assistée sur la direction du véhicule.

L'invention sera mieux comprise à la lecture de la description qui va suivre, donnée uniquement à titre d'exemple et faite en se référant aux dessins annexés, sur lesquels :

- la Fig.1 représente une vue schématique illustrant le comportement d'un véhicule soumis à une perturbation de type vent latéral ;
- la Fig.2 illustre un scénario d'évolution de différentes grandeurs liées au véhicule dans le cas d'une telle perturbation ;
- la Fig.3 représente un schéma synoptique illustrant la structure d'un système d'aide à la conduite selon l'invention ;
- la Fig.4 illustre le fonctionnement de celui-ci ;
- la Fig.5 illustre l'évolution d'une correction appliquée par un système d'aide à la conduite selon l'invention ; et
- la Fig.6 illustre le comportement d'un véhicule équipé d'un tel système d'aide à la conduite.

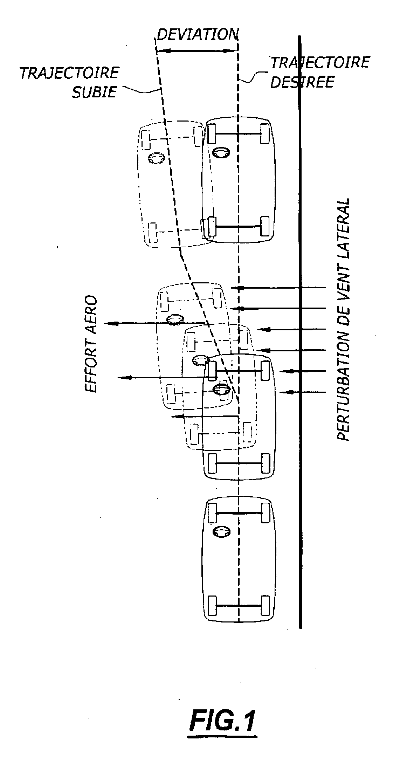

On a en effet illustré sur la figure 1 le comportement d'un véhicule de l'état de la technique soumis à un déport latéral consécutivement à une perturbation de type vent latéral.

On conçoit en effet que lorsqu'une perturbation de vent latéral s'applique sur une surface latérale du véhicule, celui-ci subit un effort aérodynamique qui le fait quitter la trajectoire souhaitée par le conducteur, ce qui se traduit par un écart de trajectoire également appelé « déviation » sur cette figure 1.

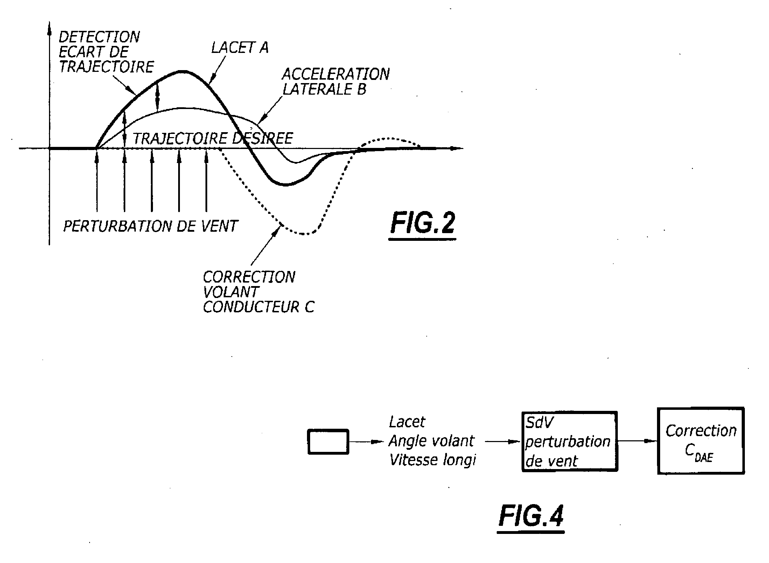

La figure 2 illustre l'évolution de différentes grandeurs liées au véhicule pendant une telle perturbation de vent.

Sur cette figure, le tracé A illustre le lacet du véhicule, le tracé B l'accélération latérale de celui-ci et le tracé C la correction appliquée par le conducteur du véhicule sur le volant pour contrecarrer cette perturbation et la déviation consécutive.

On conçoit à la vue de ces figures 1 et 2, que, alors que le conducteur du véhicule souhaite garder par exemple une trajectoire en ligne droite, une déviation s'observe à partir de deux variables de trajectoire en lacet et en accélération latérale.

Une fois que le conducteur a détecté cet écart de trajectoire, il le corrige en appliquant une correction sur le volant de direction pour revenir dans la trajectoire désirée.

Cependant, et comme cela a été mentionné précédemment, ceci présente un certain nombre d'inconvénients pour l'utilisateur.

Pour résoudre ces problèmes, l'invention propose un système d'aide qui comporte des moyens de détermination de la volonté de trajectoire du conducteur du véhicule, des moyens de détermination de la trajectoire réelle du véhicule, des moyens de détermination d'un écart de trajectoire et des moyens d'activation d'un actionneur de direction assistée électrique, équipant le véhicule, en fonction de cet écart de trajectoire, afin de compenser celui-ci.

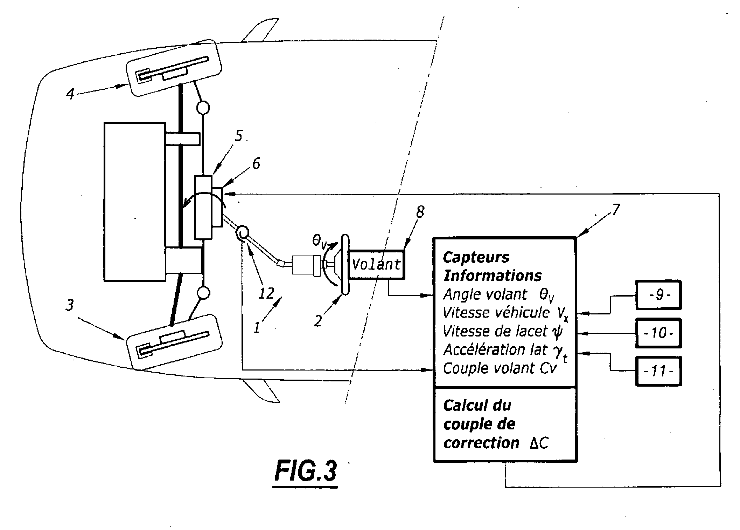

Ces différents moyens sont illustrés sur la figure 3 où l'on reconnaît en effet une direction assistée électrique de véhicule automobile, désignée par la référence générale 1, associée à une extrémité à un volant de direction désigné par la référence générale 2 et dont l'autre extrémité est associée aux roues directrices du véhicule désignées par les références générales 3 et 4.

La direction assistée électrique est désignée par la référence générale 5, cette direction assistée électrique comportant un actionneur désigné par la référence générale 6, de type classique.

Le système selon l'invention comporte également un calculateur désigné par la référence générale 7 qui est raccordé à différents capteurs, tels que par exemple un capteur d'angle de braquage du volant de direction du véhicule, désigné par la référence générale 8, un capteur de vitesse du véhicule désigné par la référence générale 9, un capteur de lacet désigné par la référence générale 10, un capteur d'accélération latérale désigné par la référence générale 11 et un capteur de couple appliqué au volant désigné par la référence générale 12 sur cette figure.

A partir de ces différentes informations, le calculateur 7 est adapté pour déterminer la volonté de trajectoire du conducteur du véhicule.

Cette volonté de trajectoire du conducteur est calculée par la relation :

$$\gamma_{t-cond} = \frac{V_x^2}{L + T_s V_x^2} \frac{\theta_v}{\lambda}$$

dans laquelle

$\gamma_{t-cond}$ représente la volonté de trajectoire du conducteur, exprimée sous la forme d'une accélération latérale souhaitée par le conducteur,

$V_x$, la vitesse du véhicule,

$\theta_v$, l'angle de braquage du volant de direction du véhicule,

$L$, l'empattement du véhicule,

$T_s$, le taux de surbraquage du véhicule qui est une constante du véhicule, et

$\lambda$, la démultiplication angle de volant / angle de roue qui est une constante du train avant du véhicule.

La trajectoire réelle du véhicule est quant à elle déterminée par le calculateur, à partir des deux composantes d'accélération latérale $\gamma_t$ et de lacet $\psi V_x$.

L'écart de trajectoire est quant à lui déterminé par la relation :

$$\text{Ecart de trajectoire} = \gamma_{t-cond} - f(\psi V_x \gamma_t)$$

A partir de ces différentes informations, le calculateur est alors adapté pour piloter l'actionneur 6 de direction assistée pour appliquer un couple de correction de direction sur la direction du véhicule selon la relation :

$$\Delta C = k \times \text{écart de trajectoire}$$

On conçoit alors comme cela est illustré sur la figure 4, que ceci permet d'appliquer un couple de correction sur la direction assistée.

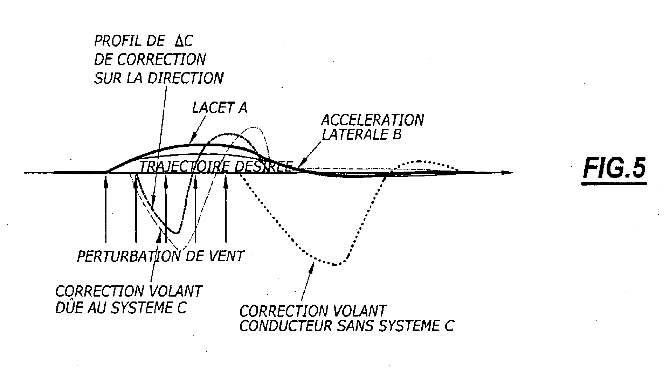

Ceci est illustré sur la figure 5, dans laquelle on constate qu'à la suite de la détection à partir de la volonté de trajectoire du conducteur, du lacet A et de l'accélération latérale B mesurés, le calculateur est adapté pour déterminer un couple de correction ΔC sur la direction afin de limiter l'écart de trajectoire par rapport à la trajectoire désirée.

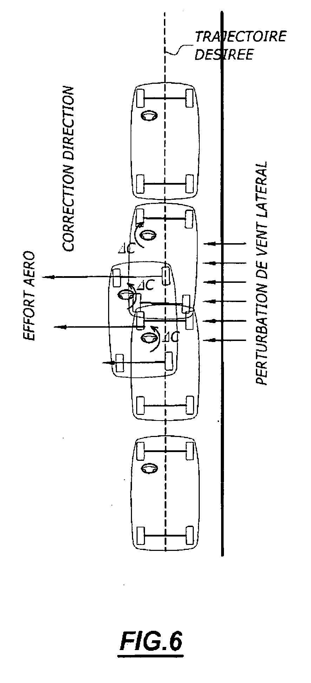

Ceci permet alors comme cela est illustré sur la figure 6, de conserver le véhicule au plus près de la trajectoire désirée par le conducteur du véhicule, les corrections à apporter par le conducteur du véhicule étant également réduites.

On conçoit alors qu'à partir d'un écart de trajectoire déterminé entre la volonté de trajectoire du conducteur et la trajectoire réelle du véhicule, on détermine un couple de correction à appliquer sur la direction du véhicule, afin d'effectuer une autorotation du volant de direction de celui-ci, permettant de corriger la déviation due à l'effort aérodynamique lié à la perturbation de vent latéral sur le véhicule.

L'écart de trajectoire est ainsi réduit et de la même façon, la correction du conducteur est moindre.

Bien entendu d'autres modes de réalisation encore peuvent être envisagés.

**Revendications**

1. Système d'aide à la conduite d'un véhicule automobile, notamment en cas de déport provoqué par un vent latéral, équipé d'une direction assistée électrique (5) munie d'un actionneur (6), **caractérisé en ce qu'**il comporte :

   - des moyens (7) de détermination de la volonté de trajectoire du conducteur du véhicule calculée par la relation suivante :

$$\gamma_{t-cond} = \frac{V_x^2}{L + T_s V_x^2} \frac{\theta_v}{\lambda}$$

   dans laquelle :

   $\gamma_{t-cond}$ représente la volonté de trajectoire du conducteur, exprimée sous la forme d'une accélération latérale souhaitée par le conducteur,
   $V_x$, la vitesse du véhicule,
   $\theta_v$, l'angle de braquage du volant de direction du véhicule,
   L, l'empattement du véhicule,
   $T_s$, le taux de surbraquage du véhicule qui est une constante du véhicule,
   $\lambda$, la démultiplication angle de volant / angle de roue qui est une constante du train avant du véhicule.;

   - des moyens (7) de détermination de la trajectoire réelle du véhicule à partir de deux composantes d'accélération latérale $\gamma_t$ et de lacet $\psi V_X$ ;
   - des moyens (7) de détermination d'un écart de trajectoire déterminé par la relation suivante :

$$\text{Ecart de trajectoire} = \gamma_{t-cond} - f(\psi V_x, \gamma_t);$$

   et
   - des moyens (7) d'activation de l'actionneur (6) de direction assistée électrique (5) en fonction de cet écart de trajectoire, afin de compenser celui-ci, comprennant des moyens d'application d'un couple de correction de direction selon la relation :

$$\Delta C = k \times \text{écart de trajectoire}$$

   dans laquelle :

   ΔC représente le couple de correction ; et
   k est une constante prédéterminée..

**2.** Système selon la revendication précédente, **caractérisé en ce qu'**il comporte un calculateur électronique (7) d'activation de la direction assistée électrique (5) raccordé à un capteur d'angle volant (8), à un capteur de vitesse du véhicule (9), à un capteur de lacet (10), à un capteur d'accélération latérale (11) et à un capteur de couple (12) appliqué sur le volant (2) par le conducteur, pour déterminer le couple de correction à appliquer par l'actionneur (6) de direction assistée sur la direction du véhicule.

**Claims**

**1.** System for aiding the driving of a motor vehicle, in particular in the event of drifting caused by a cross wind, equipped with an electric power-assisted steering system (5) provided with an actuator (6), **characterized in that** it comprises:

- means (7) for determining the vehicle driver's intended path, calculated by the following relationship:

$$\gamma_{t-cond} = \frac{V_x^2}{L + T_s V_x^2} \frac{\theta_v}{\lambda}$$

in which:

$\gamma_{t-cond}$ represents the driver's intended path, expressed in the form of a lateral acceleration desired by the driver,
$V_x$ is the speed of the vehicle,
$\theta_v$ is the angle of turn of the vehicle steering wheel,
$L$ is the wheel base of the vehicle,
$T_s$ is the degree of oversteer of the vehicle, which is a constant of the vehicle,
$\lambda$ is the steering wheel angle/road wheel angle reduction ratio, which is a constant of the front axle of the vehicle;

- means (7) for determining the actual path of the vehicle based on two acceleration components, a lateral acceleration component $\gamma_t$ and a yaw acceleration component $\psi V_x$;
- means (7) for determining a path deviation determined by the following relationship:

$$\text{path deviation} = \gamma_{t-cond} - f(\psi V_x \gamma_t);$$

and
- means (7) for activating the electric power-assisted steering actuator (6) as a function of this path deviation, in order to compensate for it, comprising means for applying a steering correction torque according to the relationship:

$$\Delta C = k \times \text{path deviation}$$

in which:

$\Delta C$ represents the correction torque; and
$k$ is a predetermined constant.

**2.** System according to the preceding claim, **characterized in that** it comprises an electronic calculator (7) for activating the electric power-assisted steering system (5), connected to a steering wheel angle sensor (8), to a vehicle speed sensor (9), to a yaw sensor (10), to a lateral acceleration sensor (11) and to a torque sensor (12) which senses the torque applied to the steering wheel (2) by the driver, in order to determine the correction torque to be applied by the power-assisted steering actuator (6) to the vehicle steering system.

**Patentansprüche**

1. Lenkunterstützungssystem für ein Kraftfahrzeug, insbesondere bei einem durch Seitenwind verursachten einem seitlichen Versatz, das mit einer elektrischen Hilfskraftlenkung (5) ausgestattet ist, die mit einem Stellglied (6) versehen ist, **dadurch gekennzeichnet, dass** es Folgendes umfasst:

   - Mittel (7) zur Bestimmung des Spurwunsches des Kraftfahrers, der durch die folgende Beziehung berechnet wird:

$$\gamma_{t\text{-}cond} = \frac{\dot{V}_x^2}{L + T_sV_x^2}\frac{\theta_v}{\lambda}$$

   wobei:

   $\gamma_{t\text{-}cond}$ den Spurwunsch des Fahrers darstellt,
   ausgedrückt in Form einer von dem Fahrer gewünschten Seitenbeschleunigung,
   $V_x$ die Geschwindigkeit des Fahrzeugs ist,
   $\theta_V$ der Einschlagwinkel des Lenkrads des Fahrzeugs ist,
   L der Achsabstand des Fahrzeugs ist,
   $T_S$ der Grad des übermäßigen Einschlags des Fahrzeugs ist, der eine Konstante des Fahrzeugs ist,
   $\lambda$ die Lenkradwinkel-/Radwinkel-Untersetzung darstellt, die eine Konstante der Vorderachse des Fahrzeugs ist;

   - Mittel (7) zur Bestimmung der tatsächlichen Spur des Fahrzeug auf Grundlage von zwei Seitenbeschleunigungskomponenten $\gamma_t$ und der Querneigung $\psi V_x$;
   - Mittel (7) zur Bestimmung einer Spurabweichung, die durch die folgende Beziehung bestimmt wird:

$$\text{Spurabweichung} = \gamma_{t\text{-}cond} - f(\Psi V_x \gamma_t);$$

   - Mittel (7) zur Aktivierung des Stellglieds (6) der elektrischen Hilfskraftlenkung (5) als Funktion dieser Spurabweichung, um diese auszugleichen, mit Mitteln zum Anlegen eines Richtungskorrekturmoments gemäß der Beziehung:

$$\Delta C = k \times \text{Spurabweichung}$$

   wobei:

   $\Delta C$ das Korrekturmoment darstellt und
   k eine vorbestimmte Konstante ist.

2. System nach dem vorhergehenden Anspruch, **dadurch gekennzeichnet, dass** es einen elektronischen Rechner (7) zur Aktivierung der elektrischen Hilfskraftlenkung (5) aufweist, der mit einem Lenkwinkelsensor (8), einem Fahrzeuggeschwindigkeitssensor (9), einem Querneigungssensor (10), einem Seitenbeschleunigungssensor (11) und einem Sensor (12) für das von dem Fahrer an das Lenkrad angelegte Moment verbunden ist, um das durch das Stellglied (6) der Hilfskraftlenkung an die Richtung des Fahrzeugs anzulegende Korrekturmoment zu bestimmen.

**_FIG.1_**

7

DETECTION
ECART DE
TRAJECTOIRE

LACET A

ACCELERATION
LATERALE B

TRAJECTOIRE DESIREE

PERTURBATION DE VENT

**FIG.2**

CORRECTION
VOLANT
CONDUCTEUR C

Lacet
Angle volant
Vitesse longi

SdV
perturbation
de vent

Correction
$C_{DAE}$

**FIG.4**

**FIG.3**

Capteurs
Informations
Angle volant $\theta_V$
Vitesse véhicule $V_x$
Vitesse de lacet $\psi$
Accélération lat $\gamma_t$
Couple volant $Cv$

Calcul du couple de correction $\Delta C$

Volant

PROFIL DE ΔC
DE CORRECTION
SUR LA DIRECTION

LACET A

ACCELERATION
LATERALE B

TRAJECTOIRE DESIREE

PERTURBATION DE VENT

CORRECTION VOLANT
DUE AU SYSTEME C

CORRECTION VOLANT
CONDUCTEUR SANS SYSTEME C

FIG.5

**FIG.6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2259892 A